(19) Europäisches Patentamt
European Patent Office
Office européen des brevets

(11) **EP 3 436 766 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(21) Anmeldenummer: **17718731.7**

(22) Anmeldetag: **31.03.2017**

(51) Int Cl.:
*G01J 3/50* (2006.01)     *G01N 21/952* (2006.01)
*G01B 7/12* (2006.01)     *G01B 7/02* (2006.01)
*G01B 11/10* (2006.01)     *G01B 11/08* (2006.01)

(86) Internationale Anmeldenummer:
**PCT/IB2017/000355**

(87) Internationale Veröffentlichungsnummer:
**WO 2017/168236 (05.10.2017 Gazette 2017/40)**

(54) **KOMBINATIONSSENSOR**

COMBINATION SENSOR

CAPTEUR MIXTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2016 EP 16163595**

(43) Veröffentlichungstag der Anmeldung:
**06.02.2019 Patentblatt 2019/06**

(73) Patentinhaber: **Schleuniger Holding AG**
**3608 Thun (CH)**

(72) Erfinder:
• **Deschler, Raphael**
**3653 Oberhofen (CH)**
• **JOST, Michael**
**3600 Thun (CH)**

• **HUGGLER, Christian**
**3612 Steffisburg (CH)**
• **HOFER, Reto**
**3705 Faulensee (CH)**

(74) Vertreter: **Patentbüro Paul Rosenich AG**
**BGZ**
**9497 Triesenberg (LI)**

(56) Entgegenhaltungen:
EP-A2- 0 692 697         CN-A- 1 403 821
CN-U- 87 214 470         DE-A1- 10 003 717
DE-A1- 10 219 848       DE-A1-102006 010 992
US-A1- 2003 107 729     US-A1- 2005 213 113
US-A1- 2009 103 111     US-A1- 2011 299 095
US-B1- 6 499 345

**Beschreibung**

Die Erfindung betrifft eine Anordnung zur automatischen Erkennung von länglichen Objekten wie Kabeln, Drähten oder Profilen, mit zumindest zwei optischen Messsystemen auf Basis unterschiedlicher Messverfahren, gemäss dem Oberbegriff des Anspruchs 1, sowie eine Anlage gemäss dem Oberbegriff des Anspruchs 15, unter Verwendung einer solchen Anordnung.

In Bearbeitungsmaschinen für Kabel, Drähte oder ähnliche längliche Objekte muss durch sichere Erkennung der Objekte sichergestellt werden, dass die Art der Bearbeitung, die Einstellungen der Maschine und deren Parameter auf das jeweilige Objekt und die vom Benutzer definierten Anforderungen abgestimmt sind. Dazu sind vorzugsweise vor oder am Eingang der Bearbeitungsmaschine Messsysteme angeordnet, die eine zuverlässige Identifikation des länglichen Objekts ermöglichen sollen. Diese umfassen mehrere Sensoranordnungen, da die Zuverlässigkeit der Identifikation mit der Anzahl unterschiedlicher Messprinzipien steigt (weil beispielsweise Kabel mit gleichem Aussendurchmesser und gleicher Farbe verschiedene interne leitende Konfigurationen aufweisen können oder Kabel mit unterschiedlichem Aufbau - Feinlitze, Litze, Draht - bei unterschiedlichem Kupferquerschnitt die gleiche elektromagnetische Charakteristik aufweisen können).

Ein Gegenstand gemäss dem Oberbegriff des Anspruch 1 ist in der CN 1 403 821 A offenbart.

In der DE10219848A1 ist ein berührungsloses Zentrizitäts- und Durchmesser-Messsystem offenbart, mit einer optischen Messvorrichtung zur Bestimmung des Aussendurchmessers und der Lage eines länglichen Objektes in einer optischen, senkrecht und quer zur Mittelachse einer Messeinrichtung angeordneten Messebene. Das Objekt weist einen Leiter und eine diesen isolierende Umhüllung auf, wobei die Lage des Leiters in einer induktiven Messebene mittels einer induktiven Messspulenvorrichtung ermittelt wird, deren Messebene ebenfalls senkrecht und quer zur Mittelachse der Messeinrichtung angeordnet ist. Die durch die optische Messvorrichtung bestimmte Lage des Objekts wird mit der durch die induktive Messspulenvorrichtung ermittelten Lage des Leiters in Beziehung gesetzt und daraus die Zentrizität des Leiters in der Umhüllung errechnet. Dabei sind die Messspulen der Messspulenvorrichtung paarweise oder hälftig bezüglich der optischen Messebene angeordnet, werden aber vom länglichen Objekt nicht durchquert. Das Messobjekt selbst verbleibt immer ausserhalb der Messspulen. Die paarweise Anordnung der Spulen dient der differenziellen Messung der Feldstärke, ausgehend vom im Leiter fliessenden Wechselstrom, der mittels eines zusätzlichen Induktors des Messsystems im Leiter induziert werden muss. Somit ist die Differenz der in den Spulen induzierten Spannungen ein Mass der Exzentrizität des Leiters bezüglich der Spulen-Spiegelachse. Die Spulen sind also nicht Teil eines Schwingkreises der vom Kupfer gedämpft wird. Überdies ist kein weiteres optisches Messsystem vorhanden.

Die WO2009150620A1 beschreibt wiederum eine Anordnung von Sensoren, die aufgrund von Messungen des Aussendurchmessers eines Kabels, des Durchmessers des innerhalb des isolierenden Mantels liegenden metallischen Leiters und gegebenenfalls weiterer von aussen detektierbarer Merkmale eine automatische oder halbautomatische Identifikation des jeweiligen zur Bearbeitung vorgesehenen Kabels oder zumindest Kabeltyps gestattet. Die verschiedenen genannten Sensoren sind funktional unabhängig voneinander, weisen keinerlei synergistische Effekte auf, weisen keinerlei gemeinsam genutzte Element oder Bereiche auf und bilden daher keinen Verbund von Messsystemen.

Die EP 0 692 697 A2 offenbart eine Vorrichtung zur Positionsbestimmung eines Leiters innerhalb eines isolierenden Mantels eines elektrischen Kabels mit elektrisch induktiven sowie optischen Mitteln. Dabei wird die Exzentrizität des Leiterkerns in Bezug zur gewünschten Position innerhalb des Kabels bestimmt.

Die US 2003/0107729 A1 bezieht sich auf die Detektion bzw. Parameterbestimmung für einen sich schnell bewegenden Garn.

Die US 2005/0213113 A1 offenbart ein Verfahren zur Messung der Querschnittsdimensionen eines länglichen Profils mit gerundeten oder scharfen Kanten, insbesondere eines flachen oder sektorförmigen Kabels. Dabei wird der zu vermessende Gegenstand mit Lichtquellen beleuchtet, wobei die Grenzen der entstehenden Schatten ermittelt werden. Daraus werden in weiterer Folge das Profil bzw. dessen Rundungen berechnet.

Die DE 100 03 717 A1 offenbart eine Messanordnung zur berührungslosen, zweidimensionalen Positionsmessung von runden oder rechteckigen Objekten. Hierfür werden zwei oder mehr LEDs oder Laserdioden gegenüberliegend angeordnet, sodass die Schatten auf einem oder mehreren CCD-Sensoren abgebildet werden.

Die US 6,499,345 B1 offenbart eine Messvorrichtung für fadenförmige Testproben, umfassend einen Messschlitz, in dem gegenüberliegende Messbereiche angeordnet sind. Die fadenförmigen Testproben werden dabei entlang ihrer Längserstreckung durch den Schlitz bewegt.

Die US 2009/0103111 A1 offenbart ein Inspektionsverfahren für das optische Vermessen eines Teiles. Dabei wird der Teil durch mehrere Beleuchtungsebenen beleuchtet, wobei die detektierten Schatten ausgewertet werden.

Die US 2011/0299095 A1 offenbart eine Schattendetektionsvorrichtung zur Messung des Querschnitts von Werkzeugen, wie Schweisswerkzeugen, mittels eines Lichtarrays mit gegenüberliegenden Lichtsensoren.

Die DE 10 2006 010 992 A1 offenbart eine Vorrichtung und ein Verfahren zur Erfassung der Position eines durch eine Auswertefläche fliegenden Gegenstands, insbesondere eines Projektils oder Pfeils, insbesondere für Schiessstände bzw. Sportschützen. Aus dieser Druckschrift ist bekannt, das Licht einer Lichtquelle - in Form eines Lichtvorhanges - durch die Auswertefläche, anschliessend durch eine Linse und zu einem hinter der Linse angeordneten Spiegel zu senden. Der Spiegel reflektiert das Licht, sodass dieses wieder durch die Linse und durch die Auswertefläche geleitet und einer Kameraeinrichtung zugeführt wird.

Es war die Aufgabe der vorliegenden Erfindung, eine verbesserte SensorAnordnung zu finden, welche Synergien verschiedener Messsysteme nutzt, damit sich eine kompakte, funktional robuste Bauweise eines Kombinationssensors ergibt, der die Ermittlung mehrerer Charakteristika des Objekts erlaubt, um daraus eine sichere Erkennung des Objekts zu ermöglichen.

Zur Lösung dieser Aufgabe ist die eingangs beschriebene Anordnung dadurch gekennzeichnet, dass zumindest ein erstes optisches Messsystem zur Bestimmung des Aussendurchmessers des Objektes und zumindest ein zweites optisches Messsystem zur Bestimmung der Farbe des Objektes einen Verbund mit einem gemeinsamen, vorzugsweise scheibenförmigen, Messvolumen bilden und dass das zweite Messsystem ein Langpassfilter aufweist, wobei dieses zwischen der ersten Beleuchtungsanordnung und der Linse angeordnet ist, für die Wellenlängenspektren des zweiten Messsystems reflektierend und für das Licht des ersten Messsystems durchlässig ist und zusammen mit der Linse so ausgelegt und positioniert ist, dass diese vom reflektierten Licht des Objektes zweimal passiert wird und ein Bild des Objektes auf das zweite Sensorarray wirft. Die Kombination mehrerer Messsysteme erhöht die Identifikationsgüte für den Typ bzw. die Art des länglichen Objekts, beispielsweise den Typ eines in einer Kabelbearbeitungsanlage zu verarbeitenden Kabels. Damit ist sichergestellt, dass die Parameter der Kabelbearbeitung dem Typ entsprechen bzw. nur passende Kabel an der jeweiligen Maschine verarbeitet werden. Die Anordnung erlaubt auch eine sehr genaue Durchmesserbestimmung des länglichen Objekts bei relativ einfacher konstruktiver Ausführung mit herkömmlichen und bewährten Bauteilen. Die Lichtquelle kann das Objekt vorteilhafterweise durch den Spalt der Führungseinrichtung beleuchten, dessen Schattenwurf ebenso durch diesen Spalt auf das erste Sensorarray fällt und dort detektiert werden kann. Da Kabeltypen oftmals beispielsweise durch die Farben von deren Ummantelung gekennzeichnet sind, erlaubt eine derartige Sensoranordnung mit Nutzung unterschiedlicher Wellenlängenspektren und deren reflektierter Intensitäten eine rasche und sehr sichere Erkennung des Kabeltyps.

Bevorzugt ist das scheibenförmige Messvolumen zwischen den beiderseitigen Enden der Führungseinrichtung, vorzugsweise in Längsrichtung mittig und vorzugsweise koaxial zur Führungseinrichtung angeordnet. Diese Führungseinrichtung kann beispielsweise eine Kabelbuchse sein, durch welche ein Kabel als zu identifizierendes längliches Objekt hindurchgeführt wird. Damit können durch eine relativ kompakte Anordnung verschiedene Messwerte und Charakteristika des Objekts erfasst werden, um dessen rasche Identifizierung mit hoher Zuverlässigkeit zu gestatten.

Bevorzugt ist dabei die Hauptebene der optischen Messsysteme mit der optischen Hauptachse senkrecht zur Längsachse der Führungseinrichtung für das längliche Objekt angeordnet.

Vorteilhafterweise weist dabei die erste Beleuchtungsanordnung eine Lichtquelle und zumindest eine Blende auf.

Bevorzugt weist die zweite Beleuchtungsanordnung mehrere, vorzugsweise drei und auch vorzugsweise nahe beieinander platzierte Lichtquellen mit unterschiedlichen Wellenlängenspektren auf und liegt das zweite Sensorarray für das vom Objekt reflektierte Licht in Bezug auf die x-z-Ebene auf der gleichen Seite des scheibenförmigen Messvolumens wie die zweite Beleuchtungsanordnung. Die Lichtquellen dieser Beleuchtungsanordnung sind vorzugsweise so platziert und ihr Lichtkegel mit einer Blende so geformt, dass ihr Licht nicht auf das Sensorgehäuse sondern nur auf das zu messende Objekt fällt.

Vorzugsweise ist dabei im zweiten Messsystem ein Ablauf implementiert, um die Lichtquellen der zweiten Beleuchtungsanordnung derart anzusteuern, um das Objekt sequentiell zu beleuchten und somit sequenziell ein Abbild in den Wellenlängenspektren der Lichtquellen auf das zweite Sensorarray zu projizieren. Dieses zweite Sensorarray ist seinerseits mit einer Auswerteeinheit für die bei der Beleuchtung mit den Lichtquellen unterschiedlicher Wellenlängenspektren gemessenen Intensitäten und für die daraus folgende Bestimmung der Farbe des Objekts verbunden.

Eine vorteilhafte Ausführungsform dieser Anordnung ist erfindungsgemäss dadurch gekennzeichnet, dass das Langpassfilter auf der optischen Hauptachse angeordnet ist, und vorzugsweise derart ausgerichtet ist, um das vom Objekt reflektierte Licht für die Farberkennung auf das ausserhalb der optischen Hauptachse positionierte und auf das Langpassfilter hin ausgerichtete zweite Sensorarray umzulenken.

Bevorzugt ist gemäss der vorliegenden Erfindung das optische Messsystem für die Durchmesserbestimmung und das optische Messsystem zur Bestimmung der Farbe zu einem dritten, virtuellen Messsystem zur Bestimmung der Position des Objekts innerhalb des scheibenförmigen Messvolumens kombiniert. Damit sind die einzelnen optischen Messungen und die induktive Messung unter Einbeziehung der Lageinformationen für das Objekt korrigierbar, um noch genauere Messergebnisse zu erhalten.

Eine weitere Ausführungsform der Erfindung sieht vor, dass das dritte Messsystem eine dritte Beleuchtungsanordnung mit vorzugsweise zwei Lichtquellen, das erste Sensorarray und optional die erste Beleuchtungsanordnung zur triangulatorischen Bestimmung der Position des Objektes innerhalb des Messvolumens umfasst.

Eine alternative Ausführungsform für die Lichtquellen für die Farbbestimmung ist jene, bei welcher die Beleuchtungskörper der dritten Beleuchtungsanordnung mehrere Lichtquellen mit jeweils unterschiedlichen Wellenlängenspektren aufweisen und ausgelegt sind, um das Objekt sequentiell zu beleuchten und somit sequenziell ein Abbild in den Wellenlängenspektren der Lichtquellen auf das zweite Sensorarray zu projizieren.

Allen Anordnungen ist das vorteilhafte Merkmal der Erfindung gemeinsam, dass die Messebene des ersten Sensorarrays senkrecht zur x-y-Ebene verläuft, diese jedoch zur Reflexionsvermeidung unter einem kleinen Winkel zur x-Achse schneiden kann. Dies ist von besonderer Bedeutung, falls die zwei Orte der Lichtquellen für die Positionsbestimmung auch als Orte für Lichtquellen für die Farbbestimmung verwendet werden.

Eine alternative Ausführungsform kann dadurch gekennzeichnet sein, dass das zweite Sensorarray für die Farbbestimmung ein multichromatisches Sensorarray ist und die Lichtquellen der zweiten Beleuchtungsanordnung gleichzeitig betrieben werden oder durch eine breit- oder mehrbandige Lichtquelle ersetzt ist.

Alternativ oder zusätzlich dazu kann auch vorgesehen sein, dass das zweite Sensorarray ein multichromatisches Sensorarray ist und zumindest eine der Lichtquellen der zweiten Beleuchtungsanordnung mit einer breit- oder mehrbandigen Lichtquelle ersetzt ist.

Vorteilhafterweise kann die Anordnung auch mit einem Temperatursensor zur Korrektur der temperaturbedingten Messfehler vorgesehen sein.

Zur Lösung der eingangs gestellten Aufgabe ist auch eine Anlage zur Bearbeitung von länglichen Objekten wie Kabeln, Drähten oder Profilen, mit einer eingangsseitig positionierten Anordnung zur automatischen Objekt-Erkennung wie in den vorhergehenden Absätzen beschrieben.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Der technische Inhalt der Patentansprüche und Figuren ist Bestandteil der Offenbarung. Die Figuren werden zusammenhängend und übergreifend beschrieben. Gleiche Bezugszeichen bedeuten gleiche Bauteile, gleiche Bezugszeichen mit unterschiedlichen Indices geben funktionsgleiche oder ähnliche Bauteile an.

Es zeigt

Fig. 1    einen Längsschnitt in der x-y-Ebene durch eine beispielhafte erfindungsgemässe Sensoranordnung für eine Kabelbearbeitungsmaschine,

Fig. 2    ein Schema der Messsysteme der Anordnung der Fig. 1,

Fig. 3    eine schematische Ansicht der Messsysteme gemäss Fig. 1 in axialer Richtung des länglichen Objekts,

Fig. 4    schematisch das Funktionsschema einer erfindungsgemässen Sensoranordnung für die Durchmesserbestimmung eines Kabels,

Fig. 5    einen Längsschnitt in der y-z-Ebene durch eine erfindungsgemässe Sensoranordnung entlang der optischen Achse,

Fig. 6    einen weiteren Längsschnitt in der y-z-Ebene durch die Sensoranordnung,

Fig. 7    die optischen Verhältnisse einer Sensoranordnung mit einem Doppellinsensystem,

Fig. 8    die optischen Verhältnisse einer Sensoranordnung mit einem Doppellinsensystem mit Spiegel,

Fig. 9    ein Diagramm mit Bildweite, Gegenstandsweite und Abbildungsmassstab als Funktion der Objekt-Bild-Distanz

Fig. 10    ein Diagramm zum Weissabgleich einer Sensoranordnung, und

Fig. 11    ein Diagramm mit den Messwerten eines orangefarbigen Kabels.

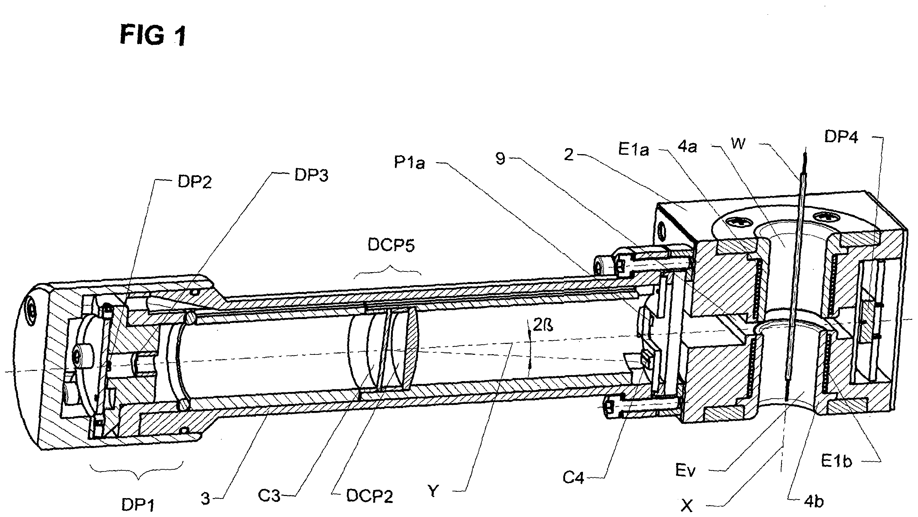

Die Fig. 1 zeigt ein Ausführungsbeispiel einer Sensoranordnung, wie sie vorzugsweise vor oder am Eingang einer Bearbeitungsmaschine für längliche Objekte, insbesondere für Bearbeitungsmaschinen für Kabel od. dgl., positioniert ist, um eine zuverlässige Identifikation des zu bearbeitenden Kabels als Messobjekt W zu ermöglichen. An der Bearbeitungsmaschine sind eingangsseitig ein Gehäuse 2 sowie ein Rohr 3 mit einem Teil des optischen Systems der Sensoranordnung befestigt. Durch die Kabelbuchsen 4a, 4b als Führungseinrichtung im Gehäuse 2 wird das längliche Objekt W in axialer Richtung und vor dem Beginn der eigentlichen Bearbeitung hindurchgeführt.

Während der Hindurchbewegung des Objekts W oder auch während einer Stillstandszeit werden der Aussendurchmesser und die Farbe des Objekts W ermittelt. Zusätzlich kann auch die Position des Objektes innerhalb der Kabelbuchsen 4a, 4b ermittelt werden. Die Sensoren zur Ermittlung dieser Messgrössen und damit die Messsysteme für Aussendurchmesser bzw. Farbe des Objekts W basieren erfindungsgemäss auf unterschiedlichen Messprinzipien, nutzen aber zumindest zum Teil gemeinsame Bereiche oder Elemente der Sensoranordnung.

Die Fig. 1 zeigt einen Schnitt durch die Sensoranordnung in der Ebene, die durch die optische Achse y und der Achse x der Kabelbuchsen 4a und 4b definiert ist. Am äussersten Ende des Rohres 3 ist eine erste Beleuchtungsanordnung DP1 des ersten optischen Messsystems D für die Durchmesserbestimmung mit seiner Lichtquelle DP2 und der Blende DP3 positioniert. Das erste optische Messsystem D kann auch Teil eines weiteren optischen Messsystems P zur Positionsbestimmung des Objekts W sein. Zwischen dem Objekt W und dieser ersten Beleuchtungsanordnung DP1 ist eine abbildende Optik DCP5 eingebaut, deren Langpassfilter C3, welches für sichtbares Licht als Spiegel wirkt, das vom Objekt W reflektierte Licht reflektiert und auf ein zweites Sensorarray C4, vorzugsweise das Linearsensorarray C4, des Messsystems C für die Farberkennung des Objekts W ausgerichtet ist. Das Gehäuse 2 beherbergt auch ein weiteres erstes Sensorarray als Detektor für das optische Messsystem D für die Durchmesserbestimmung, vorzugsweise ein Linearsensorarray DP4. Die oben beschriebenen Messsysteme C, D können allenfalls zu einem dritten, virtuellen Messsystem P verknüpft werden, wie weiter unten erläutert wird.

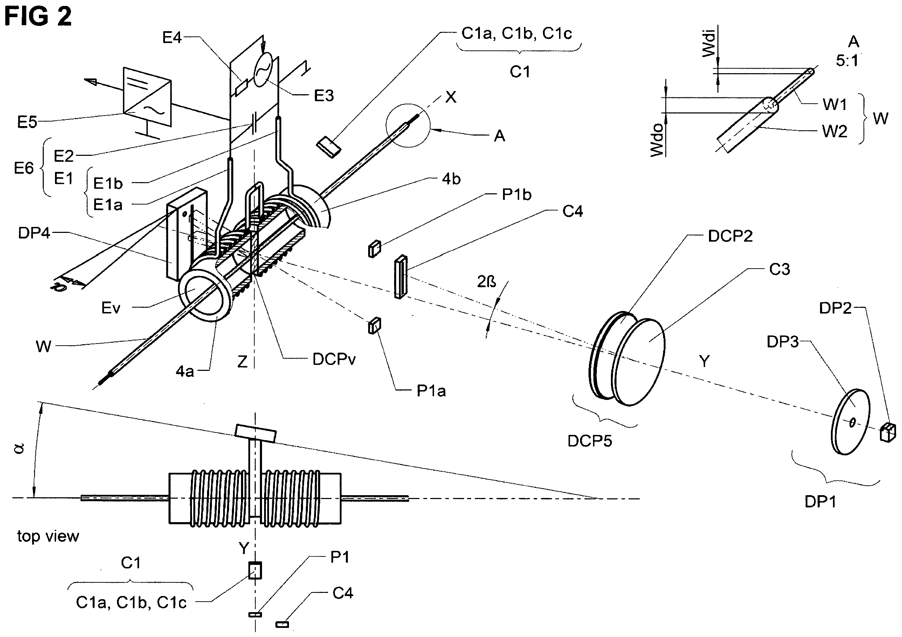

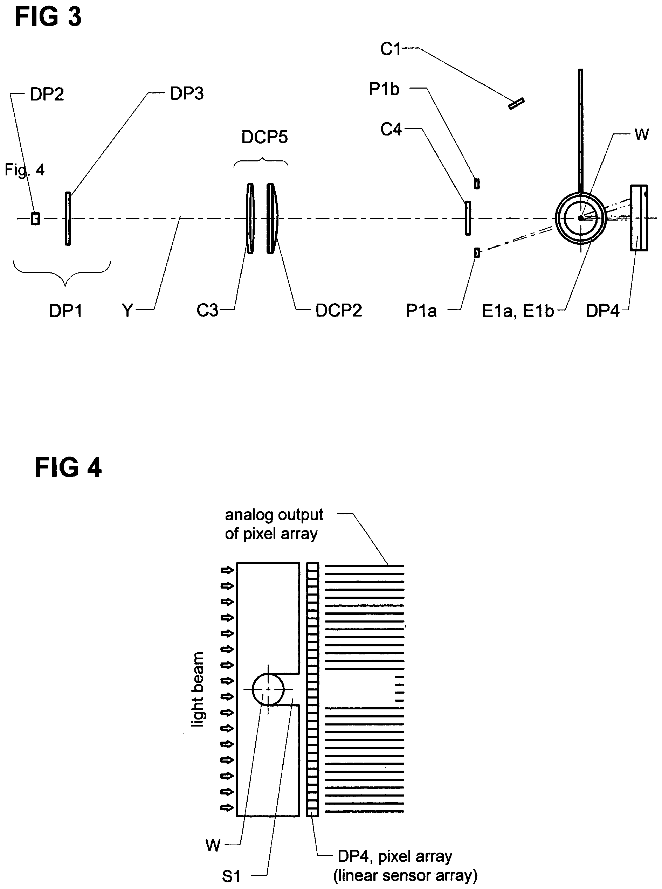

In den Fig. 2 und 3 sind die wesentlichen Elemente der Messsysteme D, C, P nochmals schematisch und in ihrer vorteilhaften gegenseitigen Anordnung dargestellt und werden nachfolgend näher erläutert. Allenfalls ist auch eine Kombination der hier dargestellten optischen Messanordnung mit weiteren Messanordnungen auf komplett anderer Basis zweckmässig, beispielsweise mit einem Wirbelstromsensor mit einer Spule E1, die aus den beiden Halb-Spulen E1a und E1b besteht, und der Kapazität E2, die zusammen einen Schwingkreis E6 eines induktiven Messsystems bilden. Dieses Messsystem, dem auch noch die Erregerschaltung E3, der Widerstand E4 und ein Signalwandler E5 angehören, erlaubt die Messung einer elektromagnetischen Charakteristik des länglichen Objekts, woraus vorzugsweise weiter der Querschnitt des leitenden Anteils des Objekts W, insbesondere der Querschnitt des oder der Leiter eines Kabels, ermittelt werden kann.

Die beiden Kabelbuchsen 4a, 4b sind in axialer Richtung geringfügig voneinander beabstandet, wodurch sich zwischen diesen beiden Bauteilen ein Spalt 9 ergibt, der im Gehäuse 2 fortgesetzt ist und Zugang zum Objekt W im Inneren der Kabelbuchsen 4a, 4b für die optischen Messsysteme D, C, P ermöglicht. Das gemeinsame Teilvolumen, das sich durch Spalt 9 und der Kabelführungsöffnung ergibt, bildet ein scheibenförmiges optisches Messvolumen DCPv.

Weiters geht aus der Fig. 2 auch hervor, dass vorzugsweise die Hauptebene y-z der optischen Messsysteme D, C, P, in welcher auch die optische Hauptachse y liegt, senkrecht zur Längsachse x der Kabelbuchsen 4a, 4b orientiert ist.

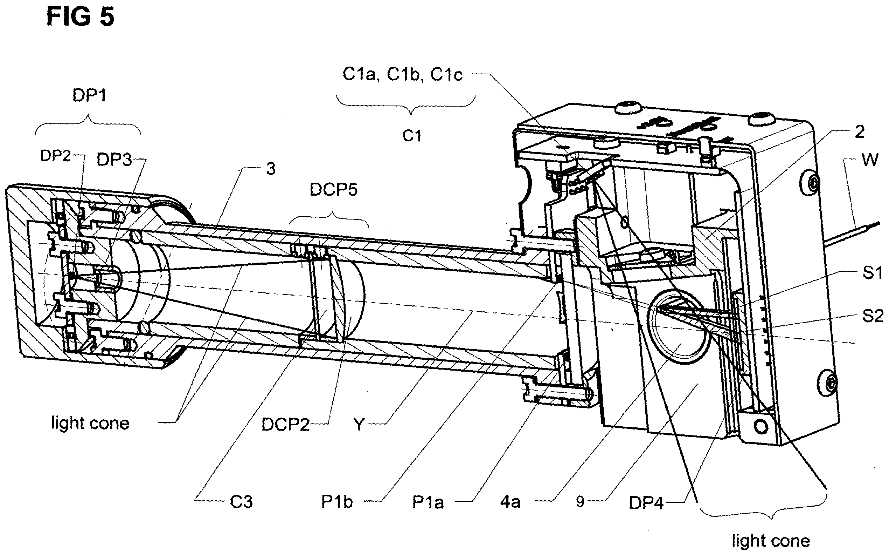

Zur optischen Messung des Aussendurchmessers des Objekts W wird dieses innerhalb der Kabelbuchse 4a, 4b im Bereich des optischen Messvolumens DCPv durch den Spalt 9 hindurch beleuchtet. Wie in Fig. 5 deutlich dargestellt ist, wird das Licht der ersten Beleuchtungsanordnung DP1 durch die Optik DCP5 des Messsystems D kollimiert, trifft auf das Objekt W und ruft einen durch S1 symbolisierten Schattenwurf hervor. Wie in Fig. 4 schematisch dargestellt ist, ruft dieser Schattenwurf S1 auf dem ersten Linearsensorarray DP4 für jedes Pixel unterschiedliche Spannungs-Pegel hervor, aus deren Verteilung auf den Kabeldurchmesser rückgeschlossen werden kann. Vorteilhafterweise verläuft die Messebene des Linearsensorarrays DP4 senkrecht zur x-y-Ebene, kann diese jedoch unter einem kleinen Winkel $\alpha$ zur x-Achse schneiden (siehe Fig. 2).

Die Parallelität des Lichtes und die Pixelweite des Sensors DP4 sind massgebend für die Genauigkeit der Messung. Das Licht der ersten Beleuchtungseinrichtung DP1 mit Lichtquelle DP2, bevorzugt als Infrarot-LED ausgeführt, passiert unbeeinflusst das Langpassfilter C3 und wird durch die Linse DCP2 kollimiert. Für andere Wellenlängen, insbesondere im Wellenlängenbereich des sichtbaren Lichts, verhält sich das Langpassfilter C3 aber wie ein Spiegel.

Das scheibenförmige optische Messvolumen DCPv wird zur Durchmesserbestimmung und zur Erkennung der Farbe des Objekts W verwendet, was zu einer wesentlichen Einsparung an Baugrösse führt. Das dafür vorgesehene zweite Messsystem C umfasst, wie in den Fig. 2 und 3 zu entnehmen ist, eine zweite Beleuchtungsanordnung C1 mit mehreren nahe beieinander platzierten Lichtquellen C1a, C1b, C1c mit unterschiedlichen Wellenlängenspektren. Vorzugsweise sind drei Lichtquellen vorgesehen. Die Lichtquellen sind beispielsweise als farbige LEDs (z.B. RGB-LEDs) ausgeführt.

Dabei ist vorzugsweise im Messsystem C ein Ablauf implementiert, beispielsweise als ausführbares Programm in einer Steuer- und Auswerteeinheit dieses Messsystems, mit welchem die Lichtquellen C1a, C1b, C1c der zweiten Beleuchtungsanordnung C1 derart angesteuert werden, um das Objekt W sequentiell zu beleuchten und somit sequenziell ein Abbild in den Wellenlängenspektren der Lichtquellen auf ein zweites Sensorarray C4 dieses Messsystems C zu projizieren. In der Auswerteeinheit des optischen Messsystems C werden die bei der Beleuchtung des Objekts W mit den Lichtquellen unterschiedlicher Wellenlängenspektren gemessenen Intensitäten für die Bestimmung der Farbe des Objekts W genutzt. Das zweite Sensorarray C4 befindet sich - siehe dazu die Fig. 1 und Fig. 2 - in Bezug auf die x-z-Ebene auf der gleichen Seite des scheibenförmigen Messvolumens DCPv wie die der Lichtquellen C1a, D1b, C1c der zweiten Beleuchtungsanordnung C1. Alternativ zum zweiten Sensorarray C4, welches für die Wellenlängen aller drei Lichtquellen empfindlich ist, könnte ein multichromatischer Sensor, der aus drei für jeweils unterschiedliche Wellenlängen empfindliche Sensoren besteht, vorgesehen sein.

Das auf der Hauptachse y des optischen Messsystems D, C, P positionierte Langpassfilter C3 ist für die Wellenlängen der Lichtquellen C1a, C1b und C1c der zweiten Beleuchtungsanordnung C1 reflektierend und lenkt dadurch das vom Objekt W reflektierte Licht auf das ausserhalb der optischen Hauptachse y positionierte zweite Sensorarray C4 um. Das Langpassfilter C3 wird also vom Licht der ersten Beleuchtungsanordnung DP1 durchsetzt, welches dann durch die Linse DCP2 hindurchtritt und dabei kollimiert wird. Vom Licht der ersten Beleuchtungsanordnung C1 wird die Linse DCP2 als bildgebende Linse zweimal passiert - nach Reflexion durch das Objekt W als auch nach Reflexion am Langpassfilter C3 - sodass deren Brechkraft zweimal genutzt und die bildgebende Brennweite fast halbiert wird. Damit das Bild etwas seitlich der optischen Achse y entsteht, ist das Lot des im Messsystem C reflektierenden Langpassfilters C3 in der x-y-Ebene in einem kleinen Winkel $\beta$ zur optischen Hauptachse y angeordnet.

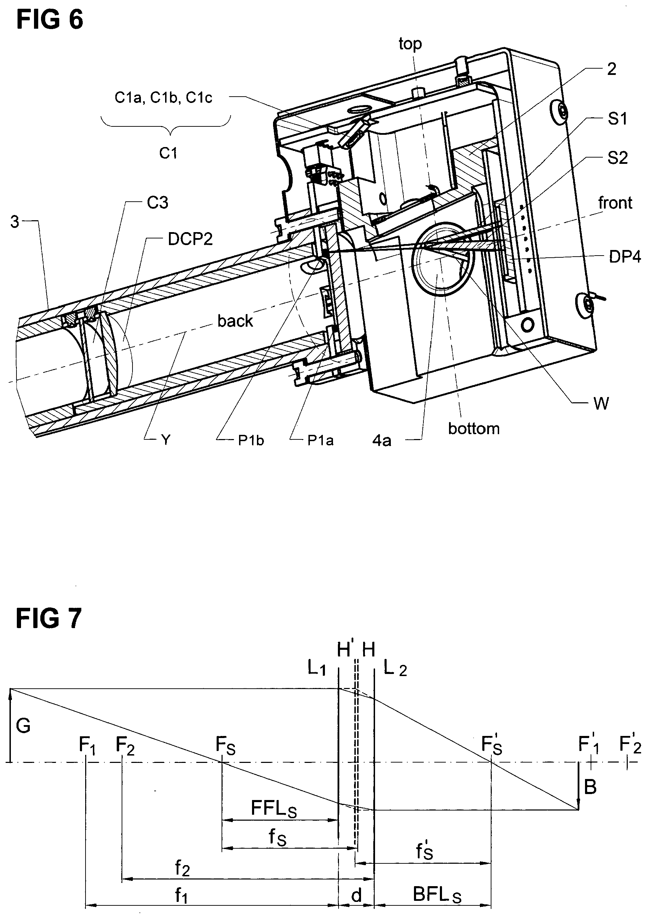

Um die Kabelfarbe zu bestimmen, werden mittels des zweiten Sensorarrays C4 vorzugsweise sequentiell drei Bilder mit jeweils unterschiedlicher Beleuchtung, beispielsweise unter rotem, grünem und blauem Licht, gemacht. Durch die projizierten Farbintensitäten kann dann in der Auswerteeinheit die Farbe des Objekts W berechnet werden. Zu beachten ist dabei, dass die vom zweiten Sensorarray C4 gemessene Farbintensität quadratisch zur Distanz zwischen den Lichtquellen und dem Objekt W sowie quadratisch zur Distanz zwischen Objekt W und Linse DCP2 abnimmt. Diese Kabel-Ortsabhängigkeit kann zum Beispiel mit angepasster Belichtungszeit korrigiert werden. Wo sich das Kabel innerhalb des optischen Messvolumens DCPv befindet, kann mit einer einfachen Triangulation mit zwei Schatten-Kanten berechnet werden, wie in Fig. 6 dargestellt ist. Mit Hilfe der Kabelposition kann eine Korrektur der Ausgangssignale des zweiten Sensorarrays C4 für die jeweilige Wellenlänge durch Interpolation zwischen im Messvolumens DCPv empirisch ermittelten Intensitätskorrekturwerten erfolgen.

Für die ortsabhängige Messwertkompensation ist vorzugsweise das erste optischen Messsystem D für die Durchmessermessung mit zwei weiteren Lichtquellen P1a und P1b zu einem dritten, virtuellen optischen Messsystem P zur Ermittlung der Position des Objekts W innerhalb des scheibenförmigen Messvolumens DCPv kombiniert. Dieses weitere optische Messsystem P nutzt mindestens zwei der Lichtquellen P1a, P1b, DP2 der oben erläuterten optischen Messsysteme sowie das erste Linearsensorarray DP4.

Alternativ kann auch eine der Lichtquellen, insbesondere der Lichtquelle der Beleuchtungsanordnung DP1 bei allein vorhandener Durchmessermessung, mit einer zusätzlichen Lichtquelle kombiniert werden. Wichtig ist dabei nur eine Beabstandung der verwendeten Lichtquellen in Umfangsrichtung der Kabelbuchsen 4a, 4b bzw. des scheibenförmigen optischen Messvolumens DCPv. Diese beiden Lichtquellen ergeben winkelmässig unterschiedliche Schattenwürfe S1, S2, deren Abstand mit Hilfe des ersten Sensorarrays DP4 bestimmt und aufgrund der bekannten geometrischen Verhältnisse in eine Ortsinformation für das Objekt W im Inneren der Kabelbuchsen 4a, 4b bzw. des induktiven Messvolumens Ev als auch des optischen Messvolumens DCPv umgerechnet werden kann.

Nachfolgend wird ein konkretes Konstruktionsbeispiel der geometrischen Optik einer Ausführungsform einer erfindungsgemässen Sensoranordnung zur Kabelfarb-Erkennung vorgestellt.

Fig. 7 zeigt ein Doppellinsensystem mit zwei gleichen Linsen $L_1$ und $L_2$, ihre zugehörigen Brennpunkte $F_1$ und $F_2$, ihre jeweiligen Brennweiten $f_1$ und $f_2$, den abzubildenden Gegenstand G und das Bild B. Die Linsen $L_1$ und $L_2$ seien im Abstand d voneinander entfernt. Um den Strahlengang und optische Berechnungen zu vereinfachen, kann das Doppellinsensystem durch eine einzige Linse mit ihren Hauptebenen H und H' und ihren zugehörigen System-Brennpunkten $F_S$ und $F_S$' ersetzt werden. Der Abstand von $F_S$ zu L1 wird auch $FFL_S$ (front focal length) genannt und der Abstand von $F_S$' zu L2 $BFL_S$ (back focal length).

Dabei gilt:

$$\frac{1}{FFL_S} = \frac{1}{f_1} + \frac{1}{f_2 - d} \qquad\qquad \textbf{1)}$$

$$FFL_S = \frac{f_1(f_2 - d)}{(f_1 + f_2) - d} \qquad\qquad \textbf{2)}$$

$$\frac{1}{BFL_S} = \frac{1}{f_2} + \frac{1}{f_1 - d} \qquad\qquad \textbf{3)}$$

$$BFL_S = \frac{f_2(f_1 - d)}{(f_1 + f_2) - d} \qquad\qquad \textbf{4)}$$

$$\frac{1}{f_S} = \frac{1}{f_1} + \frac{1}{f_2} - \frac{d}{f_1 f_2} \qquad\qquad \textbf{5)}$$

$$f_S = \frac{1}{\frac{1}{f_1} + \frac{1}{f_2} - \frac{d}{f_1 f_2}} = \frac{f_1 f_2}{f_1 + f_2 - d} \qquad \textbf{6)}$$

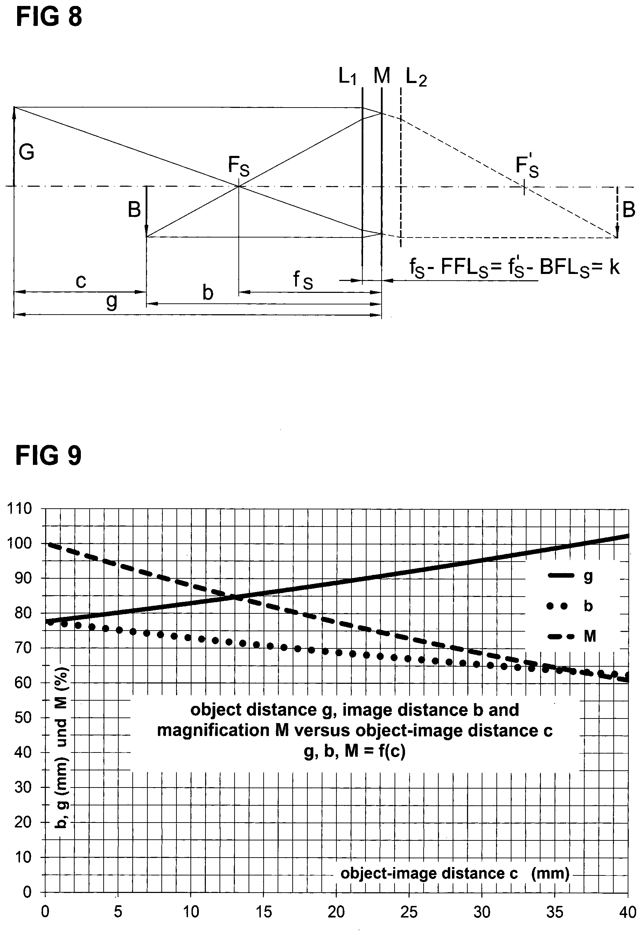

Fig. 8 zeigt das Doppellinsensystem, wenn in der Hauptebene H ein Spiegel M platziert wird. Dieser bewirkt, dass Bild B auf die Objektseite projiziert und $L_2$ weggelassen werden kann, da $L_1$ zusätzlich auch die Funktion von $L_2$ übernimmt. Fig. 8 zeigt somit schematisch die optische Situation im oben erläuterten optischen Messsystem C für die Kabelfarbe, wie sie am deutlichsten in den Fig. 2 und 3 dargestellt ist. Das reflektierende Langpassfilter C3 entspricht dem Spiegel M und die Linsen $L_1$ bzw. $L_2$ entsprechen der Kollimationslinse DCP2.

Mit dem keilförmigen Rohrstück der Optik DCP5 in Fig. 1 zwischen Spiegel M und Linse $L_1$ ist die Distanz k = 6.575 mm zwischen M und $L_1$ gegeben. Anhand der Fig. 7 und Fig. 8 kann der Abstand d zwischen den Linsen $L_1$ und $L_2$ wie folgt berechnet werden:

$$k = f_S(d) - FFL_S(d) \qquad \textbf{7)}$$

$$k = \frac{f_1 f_2}{f_1 + f_2 - d} - \frac{f_1(f_2 - d)}{(f_1 + f_2) - d} \qquad \textbf{8)}$$

$$k = \frac{f^2}{2f - d} - \frac{f^2 - fd}{2f - d} \qquad \textbf{9)}$$

$$(2f - d)k = fd \qquad \textbf{10)}$$

$$fd + kd = 2fk \qquad \textbf{11)}$$

$$d = \frac{2fk}{f + k} \qquad \textbf{12)}$$

$$d = \frac{2 \cdot 71 \cdot 6.575}{71 + 6.575} = 12.035 \qquad \textbf{13)}$$

Unter Verwendung von Formel 6 und für f = 71 mm soll nun die System-Brennweite $f_S$ berechnet werden:

$$f_s = \frac{71 \cdot 71}{71 + 71 - 12.035} = 38.787 \qquad \textbf{14)}$$

In der Konstruktion der Fig. 2, Fig. 3 und Fig. 5 ergab sich ein c (Distanz von Gegenstand G zum Bild B also von der Längsachse x zum zweiten Sensorarray C4) von 33.5 mm. Nun stellt sich die Frage, wie gross die Distanzen b (Sensor - Spiegel) und g (Längsachse x - Spiegel C3) sein müssen, damit sich beim zweiten Sensorarray C4 ein scharfes Bild ergibt.

Dies ergibt sich wie folgt (mit c = 33.5 mm):

$$\frac{1}{f_s} = \frac{1}{g} + \frac{1}{b} \qquad \textbf{15)}$$

$$g = c + b \qquad \textbf{16)}$$

$$\frac{1}{f_s} = \frac{1}{c + b} + \frac{1}{b} \qquad \textbf{17)}$$

$$\frac{1}{f_s} - \frac{1}{b} = \frac{1}{c + b}$$

$$\frac{b - f_s}{f_s b} = \frac{1}{c + b}$$

$$(b - f_s)(c + b) = f_s b$$

$$bc + b^2 - f_s c - f_s b = f_s b$$

$$b^2 + bc - 2f_s b - f_s c = 0$$

$$b^2 + b(c - 2f_s) - f_s c = 0$$

$$b = \frac{(2f_s - c)}{2} \pm \sqrt{\frac{(c - 2f_s)^2}{4} + f_s c} \qquad \textbf{18)}$$

$$b = \frac{(2 \cdot 38.787 - 33.5)}{2} \qquad \textbf{19)}$$
$$\pm \sqrt{\frac{(33.5 - 2 \cdot 38.787)^2}{4} + 38.787 \cdot 33.5}$$

$$b = 22.037 \pm 42.249 = 64.286$$

$$g = 33.5 + 64.286 = 97.786 \qquad \textbf{20)}$$

Da nun alle Dimensionen gegeben sind, kann noch der Abbildungsmassstab M berechnet werden.

$$M = \frac{b}{g} = \frac{B}{G} \qquad \textbf{21)}$$

$$M = \frac{64.286}{97.786} = 0.657 \qquad \textbf{22)}$$

Für ein zweites Sensorarray C4 mit einer Auflösung von 400 dpi und 128 Pixel ergibt sich eine aktive Sensor-Array-Länge $l_{SA}$:

$$l_{SA} = \frac{25.4 \cdot 128}{400} = 8.13 \; mm \qquad \textbf{23)}$$

Somit ergibt sich eine maximale abzubildende Gegenstandsgrösse von:

$$G = \frac{B}{M} = \frac{l_{SA}}{M} = \frac{8.128}{0.657} = 12.37 \; mm \qquad \textbf{24)}$$

Mit der System-Brennweite fs der Linse aus Formel 14 können, wie in Fig. 9 dargestellt, die Bildweite b und die Gegenstandsweite g in Abhängigkeit der Gegenstand-Bild-Distanz c also der Längsachse x - zweites Sensorarray C4 - Distanz für das konkrete Ausführungsbeispiel unter Verwendung der Gleichung 18 graphisch dargestellt werden.

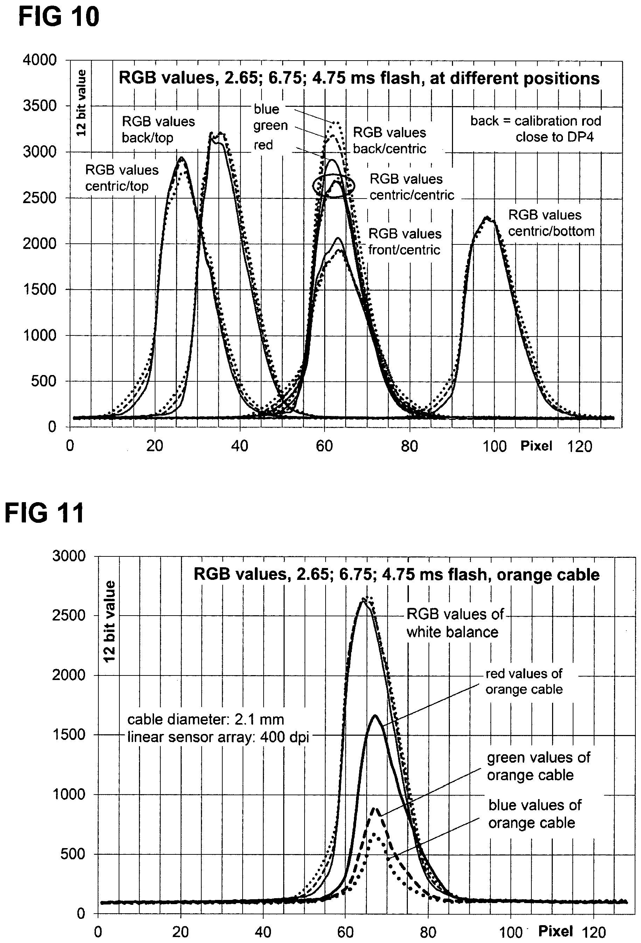

Wenn die Gegenstand-Sensor-Distanz c gegen 0 geht, geht der Abbildungsmassstab, wie in Fig. 10 zu erkennen ist, gegen 100 %. Das ist die bekannte 1/1 Abbildung mit g = b= 2*f$_S$.

Bevor mit dem zweiten Sensorarray C4 die Kabelfarbe gemessen werden kann, muss ein Weissabgleich vorgenommen werden. Dazu wird ein weisser Kalibrationsstab derart in die Kabelbuchsen 4a, 4b gelegt, dass er möglichst nahe bei der zweiten Beleuchtungsanordnung C1 liegt, damit das zweite Sensorarray C4 die grösste Helligkeit misst. Die maximal erlaubten Beleuchtungszeiten bei der Beleuchtung mit den unterschiedlichen Wellenlängen (rot, grün, blau) werden dann so eingestellt, dass die gemessenen Amplituden etwa 90% des Messbereiches ausmachen. Danach wird der Kalibrationsstab in die Längsachse x gelegt und die Belichtungszeiten so eingestellt, dass die vom zweiten Sensorarray C4 gemessenen RGB-Integralwerte alle gleich gross sind. Dabei werden die zwei höheren Integralwerte dem tiefsten angepasst, sodass die zuvor bestimmten maximalen Belichtungszeiten von keiner Farbe überschritten werden (siehe Fig. 10). Da die Helligkeit des Bildes mit zunehmender Distanz zwischen Lichtquelle und Objekt W und zwischen Objekt W und Linse DCP2 abnimmt, müssen die Helligkeitswerte für die unterschiedlichen Wellenlängen je nach Kabelposition gewichtet werden. In Fig. 10 sind zum Beispiel für sechs Kalibrationsstabpositionen innerhalb der Kabelbuchsen 4a, 4b RGB-Messwerte dargestellt: Für den weissen Kalibrationsstab im Zentrum der Kabelbuchsen 4a, 4b gelten die mit "centric/centric" bezeichneten Kurven. Befindet sich der Kalibrationsstab in der Kabelbuchsen 4a, 4b nahe dem zweiten Sensorarray C4 gelten die die mit "back/centric" bezeichneten Linien. In Fig. 6 sind die Ortsangaben back, front, bottom und top gekennzeichnet damit die in Fig. 10 dargestellten Messwerte richtig interpretiert werden können.

Das Verhältnis der mit einem Kalibrationsstab gemessenen RGB-Integralwerte eines bestimmten Ortes zu den RGB-Integralwerten des Zentrums sind Farbkorrekturwerte. Sie sind ortsabhängig.

Fig. 11 schliesslich zeigt RGB-Messwerte eines orangefarbigen Kabels als Objekt W im Zentrum der Kabelbuchsen.

Nebst den schon erwähnten Vorteilen der quasi-koaxialen Anordnung der Messsysteme D, C und P wie kompakte, robuste, mechanisch und funktionell synergienutzender Bauweise ist ein weiterer Vorteil, dass viele Schaltungsteile der Elektronik wie Kommunikationsschnittstelle, Mikrokontroller, Speisung, LED-Anzeigen und Schutzbeschaltungen für alle drei Sensoren bzw. Systeme D, C und P verwendet werden können.

Je grösser die Brennweite der Linse DCP2 für die Kollimation ist, desto besser ist die Kollimation, d.h. die Parallelität des Lichtes und desto scharfkantiger ist der Schattenwurf für die Durchmessermessung. Auch für die Farbbestimmung ist eine grosse Brennweite der Linse DCP2 vorteilhaft, da dann die Kabel-Linsen-Distanz g grösser wird und somit die Bildschärfe für die Farberkennung erhalten bleibt, auch wenn das Objekt W nicht zentrisch durch die Kabelbuchsen 4a, 4b laufen sollte. Mit zunehmender Brennweite nimmt jedoch für die Durchmessermessung wie auch für die Farbbestimmung die Lichtintensität ab, was mit einer längeren Belichtungszeit kompensiert werden muss, sodass für beide Funktionalitäten ein Kompromiss zwischen Lichtintensität und Bildschärfe gefunden werden muss.

Die oben erläuterte Anordnung zur automatischen Erkennung von länglichen Objekten mit den rein optischen Messsystemen D, C, P kann bei Bedarf nicht nur mit einem induktiven Messsystem E sondern mit noch weiteren Messsystemen verknüpft werden. Bei Kabelbearbeitungsanlagen sind oftmals Vorrichtungen zum Ablängen oder Abisolieren der Kabel vorhanden, die gegeneinander bewegbare Klemmbacken und Messer umfassen. Für derartige Anlagen können die Messsysteme D, C, P, E mit zumindest einem weiteren Messsystem kombiniert werden, welches zur Bestimmung des Aussendurchmessers des Objekts mittels einer Klemmbackenabstandsmessung oder zur Bestimmung des Durchmessers eines elektrischen Leiters innerhalb des Objekts auf Basis einer Messerabstandsmessung zum Zeitpunkt einer Messer-Leiter-Berührung vorgesehen ist. Messanordnungen auf elektrischer Basis, insbesondere durch Überwachung von kapazitiven und/oder induktiven Charakteristika, sind hinlänglich bekannt.

Um temperaturbedingte Messfehler kompensieren zu können, ist die Verwendung eines Temperatursensors in Verbindung mit den Messsystemen D, C, P, E vorteilhaft. Dabei ist für eine automatisierte Kompensation bevorzugt ein Korrekturablauf im jeweiligen Messsystem implementiert, um dessen Messwert mit einem Korrekturfaktor als Funktion der Temperatur und mit einem Korrekturfaktor als Funktion des Kabelortes zu versehen.

**Patentansprüche**

1. Anordnung zur automatischen, berührungslosen Erkennung von länglichen Objekten (W) wie Kabeln, Drähten oder Profilen, mit zumindest zwei optischen Messsystemen (D, C) auf Basis unterschiedlicher Messverfahren, wobei zumindest ein erstes optisches Messsystem (D) zur Bestimmung des Aussendurchmessers (Wdo) des Objektes (W) und zumindest ein zweites optisches Messsystem (C) zur Bestimmung der Farbe des Objektes (W) vorgesehen sind, wobei das erste Messsystem (D) zumindest eine erste Beleuchtungsanordnung (DP1) sowie ein auf der gegenüberliegenden Seite des Messvolumens (DCPv) positioniertes erstes Sensorarray (DP4) aufweist, wobei zwischen der ersten Beleuchtungsanordnung (DP1) und dem Messvolumen (DCPv) eine Linse (DCP2) angeordnet ist, die als Kollimationslinse für das Licht der ersten Beleuchtungsanordnung (DP1) ausgelegt und positioniert ist, und wobei das zweite Messsystem (C) zumindest eine zweite Beleuchtungsanordnung (C1) und ein zweites Sensorarray (C4) aufweist, **dadurch gekennzeichnet, dass** zumindest ein erstes optisches Messsystem (D) zur Bestimmung des Aussendurchmessers (Wdo) des Objektes (W) und zumindest ein zweites optisches Messsystem (C) zur Bestimmung der Farbe des Objektes (W) einen Verbund mit einem gemeinsamen, vorzugsweise scheibenförmigen, Messvolumen (DCPv) bilden und dass das zweite Messsystem (C) ein Langpassfilter (C3) aufweist, wobei dieses zwischen der ersten Beleuchtungsanordnung (DP1) und der Linse (DCP2) angeordnet ist, für die Wellenlängenspektren des zweiten Messsystems (C) reflektierend und für das Licht des ersten Messsystems (D) durchlässig ist und zusammen mit der Linse (DCP2) so ausgelegt und positioniert ist, dass diese vom reflektierten Licht des Objektes (W) zweimal passiert wird und ein Bild des Objektes (W) auf das zweite Sensorarray (C4) wirft.

2. Anordnung nach Anspruch 1, **dadurch gekennzeichnet, dass** das scheibenförmige Messvolumen (DCPv) zwischen den beiderseitigen Enden der Führungseinrichtung (4a, 4b), vorzugsweise in Längsrichtung mittig und vorzugsweise koaxial zur Führungseinrichtung (4a, 4b), angeordnet ist.

3. Anordnung nach Anspruch 1, **dadurch gekennzeichnet, dass** die Hauptebene (y-z) des ersten und zweiten optischen Messsystems (D, C) mit der optischen Hauptachse (y) senkrecht zur Längsachse (x) der Führungseinrichtung (4a, 4b) für das längliche Objekt (W) angeordnet ist.

4. Anordnung nach Anspruch 1, **dadurch gekennzeichnet, dass** die erste Beleuchtungsanordnung (DP1) eine Lichtquelle (DP2) und zumindest eine Blende (DP3) aufweist.

5. Anordnung nach Anspruch 1, **dadurch gekennzeichnet, dass** die zweite Beleuchtungsanordnung (C1) mehrere, vorzugsweise drei und auch vorzugsweise nahe beieinander platzierte, Lichtquellen (C1a, C1b, C1c) mit unterschiedlichen Wellenlängenspektren aufweist und dass das zweite Sensorarray (C4) für das vom Objekt (W) reflektierte Licht in Bezug auf die x-z-Ebene auf der gleichen Seite des scheibenförmigen Messvolumens (DCPv) wie die zweite Beleuchtungsanordnung (C1) liegt.

6. Anordnung nach Anspruch 5, **dadurch gekennzeichnet, dass** im zweiten Messsystem (C) ein Ablauf implementiert ist, die Lichtquellen (C1a, C1b, C1c) der zweiten Beleuchtungsanordnung (C1) derart anzusteuern, um das Objekt (W) sequentiell zu beleuchten und somit sequenziell Abbilder in den Wellenlängenspektren der Lichtquellen der zweiten Beleuchtungsanordnung auf das zweite Sensorarray (C4) zu projizieren, wobei dieses mit einer Auswerteeinheit für die bei der Beleuchtung mit den Lichtquellen unterschiedlicher Wellenlängenspektren gemessenen Intensitäten und für die daraus folgende Bestimmung der Farbe des Objekts (W) verbunden ist.

7. Anordnung nach Anspruch 1, **dadurch gekennzeichnet, dass** das Langpassfilter (C3) auf der Hauptachse (y) angeordnet ist, und vorzugsweise derart ausgerichtet ist, um das vom Objekt (W) reflektierte Licht auf das ausserhalb der optischen Hauptachse (y) positionierte und auf das Langpassfilter (C3) hin ausgerichtete zweite Sensorarray (C4) umzulenken.

8. Anordnung nach einem der Ansprüche 1 bis 7, **dadurch gekennzeichnet, dass** die optischen Messsysteme (D) zur Bestimmung des Durchmessers und (C) zur Bestimmung der Farbe des Objektes (W) zu einem dritten, virtuellen Messsystem (P) zur Bestimmung der Position des Objekts (W) innerhalb des scheibenförmigen Messvolumens (DCPv) kombiniert sind.

**9.** Anordnung nach Anspruch 8, **dadurch gekennzeichnet, dass** das dritte Messsystem (P) eine dritte Beleuchtungsanordnung (P1) mit vorzugsweise zwei Lichtquellen (P1a, P1b), das erste Sensorarray (DP4) und optional die erste Beleuchtungsanordnung (DP1) zur triangulatorischen Bestimmung der Position des Objektes (W) innerhalb des Messvolumens (DCPv) umfasst.

**10.** Anordnung nach Anspruch 9, **dadurch gekennzeichnet, dass** die dritte Beleuchtungsanordnung (P1) mehrere Lichtquellen mit jeweils unterschiedlichen Wellenlängenspektren aufweisen und ausgelegt sind, um das Objekt (W) sequentiell zu beleuchten und somit sequenziell ein Abbild in den Wellenlängenspektren der Lichtquellen auf das zweite Sensorarray (C4) zu projizieren.

**11.** Anordnung nach Anspruch 1, **dadurch gekennzeichnet, dass** die Messebene des ersten Sensorarrays (DP4) senkrecht zur x-y-Ebene verläuft, diese jedoch unter einem kleinen Winkel (a) zur x-Achse schneidet.

**12.** Anordnung nach einem der Ansprüche 5 bis 11, **dadurch gekennzeichnet, dass** das zweite Sensorarray (C4) ein multichromatischer Sensor ist und die Lichtquellen (C1a, C1b und C1c) der zweiten Beleuchtungsanordnung (C1) gleichzeitig betrieben werden oder durch eine breit- oder mehrbandige Lichtquelle ersetzt werden.

**13.** Anordnung nach einem der Ansprüche 5 bis 11, **dadurch gekennzeichnet, dass** das zweite Sensorarray (C4) ein multichromatischer Sensor ist und zumindest eine der Lichtquellen der dritten Beleuchtungsanordnung (P1) mit einer breit- oder mehrbandigen Lichtquelle ersetzt wird.

**14.** Anordnung nach einem der Ansprüche 1 bis 13, **dadurch gekennzeichnet, dass** die Anordnung einen Temperatursensor (T) aufweist.

**15.** Anlage zur Bearbeitung von länglichen Objekten (W) wie Kabeln, Drähten oder Profilen, **dadurch gekennzeichnet, dass** die Anlage eine eingangsseitig positionierte Anordnung zur automatischen Objekt-Erkennung nach einem der Ansprüche 1 bis 14 aufweist.

**Claims**

**1.** Arrangement for automatic, contactless detection of elongate objects (W) such as cables, wires or profiles, with at least two optical measuring systems (D, C) based on different measuring methods, wherein at least one first optical measuring system (D) for determining the outer diameter (Wdo) of the object (W) and at least one second optical measuring system (C) for determining the colour of the object (W) are provided, wherein the first measuring system (D) includes at least one first illumination arrangement (DP1) and a first sensor array (DP4) positioned on the opposite side of the measurement volume (DCPv), wherein a lens (DCP2) is arranged between the first illumination arrangement (DP1) and the measurement volume (DCPv) and is designed and positioned as a collimation lens for the light of the first illumination arrangement (DP1), and wherein the second measuring system (C) includes at least one second illumination arrangement (C1) and a second sensor array (C4), **characterized in that** at least one first optical measuring system (D) for determining the outer diameter (Wdo) of the object (W) and at least one second optical measuring system (C) for determining the colour of the object (W) form a compound structure with a common, preferably disc-shaped, measurement volume (DCPv), and that the second measurement system (C) includes a long pass filter (C3), wherein said long pass filter is arranged between the first illumination arrangement (DP1) and the lens (DCP2), is reflective for the wavelength spectra of the second measuring system (C) and translucent for the light of the first measuring system (D), and is designed and positioned together with the lens (DCP2) in such manner that the reflected light of the object (W) passes through the lens twice and throws an image of the object (W) onto the second sensor array (C4).

**2.** Arrangement according to Claim 1, **characterized in that** the disc-shaped measurement volume (DCPv) is arranged between the two ends of the guide means (4a, 4b), preferably centrally in the longitudinal direction and preferably coaxially with the guide means (4a, 4b).

**3.** Arrangement according to Claim 1, **characterized in that** the main plane (y-z) of the first and second optical measuring system (D, C) is arranged with the main optical axis (y) perpendicular to the longitudinal axis (x) of the guide means (4a, 4b) for the elongate object (W) .

**4.** Arrangement according to Claim 1, **characterized in that** the first illumination arrangement (DP1) has a light source (DP2) and at least one screen (DP3).

5. Arrangement according to Claim 1, **characterized in that** the second illumination arrangement (C1) has a plurality of, preferably three, light sources (C1a, C1b, C1c) which are also preferably positioned close to each other, with different wavelength spectra, and that the second sensor array (C4) for the light reflected from the object (W) lies on the same side of the disc-shaped measurement volume (DCPv) as the second illumination arrangement (C1) with reference to the x-z plane.

6. Arrangement according to Claim 5, **characterized in that** in the second measuring system (C) a sequence is implemented for actuating the light sources (C1a, C1b, C1c) of the second illumination arrangement (C1) in such manner as to illuminate the object (W) sequentially, thus projecting images onto the second sensor array (C4) sequentially in the wavelength spectra of the light sources of the second illumination arrangement, wherein the second sensor array is connected to an unit for evaluating the intensities measured when illuminating with the light sources of different wavelength spectra and for the consequent determination of the colour of the object (W).

7. Arrangement according to Claim 1, **characterized in that** the long pass filter (C3) is arranged on the main axis (y), and is preferably aligned in such manner as to redirect the light reflected from the object (W) onto the second sensor array (C4) which is positioned outside of the optical main axis (y) positioned and aligned towards the long pass filter (C3).

8. Arrangement according to any one of Claims 1 to 7, **characterized in that** the optical measuring systems (D) for determining the diameter and (C) for determining the colour of the object (W) are combined to form a third, virtual measuring system (P) for determining the position of the object (W) within the disc-shaped measurement volume (DCPv).

9. Arrangement according to Claim 8, **characterized in that** the third measuring system (P) comprises a third illumination arrangement (P1) with preferably two light sources (P1a, P1b), the first sensor array (DP4) and optionally the first illumination arrangement (DP1) for determining the position of the object (W) within the measurement volume (DCPv) by triangulation.

10. Arrangement according to Claim 9, **characterized in that** the third illumination arrangement (P1) includes a plurality of light sources, each having different wavelength spectra and being designed to illuminate the object (W) sequentially and thus project an image onto the second sensor array (C4) sequentially in the wavelength spectra of the light sources.

11. Arrangement according to Claim 1, **characterized in that** the measuring plane of the first sensor array (DP4) extends perpendicularly to the x-y plane but intersects it at a slight angle ($\alpha$) to the x-axis.

12. Arrangement according to any one of Claims 5 to 11, **characterized in that** the second sensor array (C4) is a multichromatic sensor, and the light sources (C1a, C1b and C1c) of the second illumination arrangement (C1) can be operated simultaneously or replaced with a broadband or multi-band light source.

13. Arrangement according to any one of Claims 5 to 11, **characterized in that** the second sensor array (C4) is a multichromatic sensor, and at least one of the light sources of the third illumination arrangement (P1) is replaced with a broadband or multi-band light source.

14. Arrangement according to any one of Claims 1 to 13, **characterized in that** the arrangement includes a temperature sensor (T).

15. System for processing elongate objects (W) such as cables, wires or profiles, **characterized in that** the system includes an arrangement according to any one of claims 1 to 14 positioned on the input side for automatic object detection.

**Revendications**

1. Système d'identification automatique, sans contact d'objets longitudinaux (W) comme des câbles, des fils ou des profilés, avec au moins deux systèmes de mesure optiques (D, C) sur la base de procédés de mesure différents, sachant au moins qu'un premier système de mesure optique (D) de détermination du diamètre extérieur (Wdo) de l'objet (W) et au moins un deuxième système de mesure optique (C) de détermination de la couleur de l'objet (W) sont prévus, sachant que le premier système de mesure (D) comporte au moins un premier système d'éclairage (DP1) ainsi qu'un premier ensemble de capteur (DP4) positionné sur le côté opposé du volume de mesure, sachant qu'entre le premier système d'éclairage (DP1) et le volume de mesure (DCPv) est disposée une lentille (DCP2), qui est conçue et positionnée comme lentille de collimation pour la lumière du premier système d'éclairage (DP1) et sachant que le deuxième système de mesure (C) comporte au moins un deuxième système d'éclairage (C1) et un deuxième ensemble de capteur (C4), **caractérisé en ce qu'**au moins un premier système de mesure optique (D) de détermination du diamètre extérieur (Wdo) de l'objet (W) et au moins un deuxième système de mesure optique (C) de détermination de la couleur de l'objet (W) forment une combinaison avec un volume de mesure (DCPv) commun, de préférence en forme de disque et **en ce que** le deuxième système de mesure (C) comporte un filtre à large bande (C3), sachant que celui-ci est disposé entre le premier système d'éclairage (DP1) et la lentille (DCP2), est réfléchissant pour les spectres de longueurs d'ondes du deuxième système de mesure (C) et transparent pour la lumière du premier système de mesure (D) et est conçu et positionné avec la lentille (DCP2) de manière à ce que celle-ci soit passée deux fois par la lumière réfléchissante de l'objet (W) et projette une image de l'objet (W) sur le deuxième ensemble de capteur (C4).

2. Système selon la revendication 1, **caractérisé en ce que** le volume de mesure en forme de disque (DCPv) est disposé au centre et de préférence coaxialement au dispositif de guidage (4a, 4b) entre les extrémités des deux côtés du dispositif de guidage (4a, 4b).

3. Système selon la revendication 1, **caractérisé en ce que** le plan principal (y-z) du premier et du deuxième système de mesure optique (D, C) est disposé avec l'axe principal optique (y) perpendiculairement à l'axe longitudinal (x) du dispositif de guidage (4a, 4b) pour l'objet longitudinal (W).

4. Système selon la revendication 1, **caractérisé en ce que** le premier système d'éclairage (DP1) comporte une source lumineuse (DP2) et au moins un écran (DP3).

5. Système selon la revendication 1, **caractérisé en ce que** le deuxième système d'éclairage (C1) comporte plusieurs sources lumineuses (C1a, C1b, C1c), de préférence trois et également de préférence placées proches l'une à côté de l'autre, avec des spectres de longueurs d'ondes différents et **en ce que** le deuxième ensemble de capteur (C4) pour la lumière réfléchie par l'objet (W) est situé par rapport au plan x-z sur le même côté du volume de mesure en forme de disque (DCPv) comme le deuxième système d'éclairage (C1).

6. Système selon la revendication 5, **caractérisé en ce que** dans le deuxième système de mesure (C) un cycle est mis en œuvre pour piloter les sources lumineuses (C1a, C1b, C1c) du deuxième système d'éclairage (C1) de manière à éclairer séquentiellement l'objet (W) et projeter ainsi des reproductions séquentiellement dans les spectres de longueurs d'ondes des sources lumineuses du deuxième système d'éclairage sur le deuxième ensemble de capteur (C4), sachant que celui-ci est relié à une unité d'exploitation pour les intensités mesurées lors de l'éclairage avec les sources lumineuses des spectres de longueurs d'ondes différents et pour la détermination s'en suivant de la couleur de l'objet (W).

7. Système selon la revendication 1, **caractérisé en ce que** le filtre à large bande (C3) est disposé sur l'axe principal (y) et est orienté de préférence de manière à dévier la lumière réfléchie par l'objet (W) sur le deuxième ensemble de capteur (C4) positionné en dehors de l'axe principal (y) optique et orienté sur le filtre à large bande (C3).

8. Système selon l'une quelconque des revendications 1 à 7, **caractérisé en ce que** les systèmes de mesure optiques (D) de détermination du diamètre et (C) de détermination de la couleur de l'objet (W) sont combinés à un troisième système de mesure virtuel (P) de détermination de la position de l'objet (W) à l'intérieur du volume de mesure en forme de disque (DCPv).

9. Système selon la revendication 8, **caractérisé en ce que** le troisième système de mesure (P) comprend un troisième système d'éclairage (P1) avec de préférence deux sources lumineuses (P1a, P1b), le premier ensemble de capteur (DP4) et en option le premier système d'éclairage (DP1) pour la détermination triangulaire de la position de l'objet (W) à l'intérieur du volume de mesure (DCPv).

10. Système selon la revendication 9, **caractérisé en ce que** le troisième système d'éclairage (P1) comporte et avec plusieurs sources lumineuses avec des spectres de longueurs d'ondes respectivement différents et est conçu pour éclairer séquentiellement l'objet (W) et projeter ainsi séquentiellement une reproduction dans les spectres de longueurs d'ondes des sources lumineuses sur le deuxième ensemble de capteur (C4).

11. Système selon la revendication 1, **caractérisé en ce que** le plan de mesure du premier ensemble de capteur (DP4) passe perpendiculairement au plan x-y, celui-ci coupant toutefois sous un petit angle ($\alpha$) par rapport à l'axe x.

12. Système selon l'une quelconque des revendications 5 à 11, **caractérisé en ce que** le deuxième ensemble de capteur (C4) est un capteur multichromatique et les sources lumineuses (C1a, C1b et C1c) du deuxième système d'éclairage (C1) sont actionnées simultanément ou sont remplacées par une source lumineuse à large bande ou multibande.

13. Système selon l'une quelconque des revendications 5 à 11, **caractérisé en ce que** le deuxième ensemble de capteur (C4) est un capteur multichromatique et au moins une des sources lumineuses du troisième système d'éclairage (P1) est remplacée par une source lumineuse à large bande et multibande.

14. Système selon l'une quelconque des revendications 1 à 13, **caractérisé en ce que** le système comporte un capteur de température (T).

15. Installation de traitement d'objets longitudinaux (W) comme des câbles, des fils ou des profilés, **caractérisée en ce que** l'installation comporte un système positionné du côté entrée pour l'identification automatique d'objets selon l'une quelconque des revendications 1 à 14.

FIG 1

# FIG 2

C1a, C1b, C1c
C1

DP2
DP3
DP1

DCP2
C3

Y

DCP5

C4
P1b
4b
2ß
P1a
DCPv

X
A

E3
E4
E2
E1 { E1b, E1a }
E5
E6
DP4
Ev
4a
Z
W

A
5:1
W1
W2 } W
Wdi
Wdo

top view
α
P1
C4
Y
C1a, C1b, C1c
C1

# FIG 3

DP2

DP3

Fig. 4

C1

P1b

C4

DCP5

W

DP1    Y    C3    DCP2    P1a    E1a, E1b    DP4

# FIG 4

analog output
of pixel array

light beam

W

S1

DP4, pixel array
(linear sensor array)

**FIG 5**

C1a, C1b, C1c

DP1

C1

DP2 — DP3

3

2

DCP5

W

light cone

S1

S2

DCP2 — Y

C3

P1b

P1a

4a

9

DP4

light cone

EP 3 436 766 B1

## FIG 6

## FIG 7

## FIG 8

$$f_S - FFL_S = f'_S - BFL_S = k$$

## FIG 9

object distance g, image distance b and
magnification M versus object-image distance c
g, b, M = f(c)

object-image distance c  (mm)

## FIG 10

RGB values, 2.65; 6.75; 4.75 ms flash, at different positions

## FIG 11

RGB values, 2.65; 6.75; 4.75 ms flash, orange cable

**EP 3 436 766 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 1403821 A
- DE 10219848 A1
- WO 2009150620 A1
- EP 0692697 A2
- US 20030107729 A1
- US 20050213113 A1
- DE 10003717 A1
- US 6499345 B1
- US 20090103111 A1
- US 20110299095 A1
- DE 102006010992 A1